# EUROPÄISCHE PATENTANMELDUNG

(11) **EP 2 339 282 A2**
(43) Veröffentlichungstag der Anmeldung: **29.06.2011**
(21) Anmeldenummer: 10196196.9
(22) Anmeldetag: 21.12.2010
(51) Int. Cl.: F28D 20/00

(54) **Speicher zum temperaturgeschichteten Speichern von warmen Flüssigkeiten unterschiedlicher Temperatur**

(30) Priorität: 28.12.2009 DE 102009060817
(71) Anmelder: Solvis GmbH & Co. KG, 38112 Braunschweig (DE)
(72) Erfinder: Wendker, Kai, 38106, Braunschweig (DE); Form, Jochen, 38106, Braunschweig (DE); Woelk, Karsten, 38527, Meine (DE); Grundei, Daniel, 38110, Braunschweig (DE)
(74) Vertreter: Einsel, Martin

(57) **Zusammenfassung**

Ein Speicher (10) dient zum temeraturgeschichteten Speichern von warmen Flüssigkeiten unterschiedlicher Temperatur. Er besitzt einen Mantel (11), einen Boden (12) und eine Oberseite (13). Der Mantel (11) umgibt ein Speicherinneres (16), das für die Aufnahme der Flüssigkeiten vorgesehen ist. Beladeeinrichtungen (33) dienen zur Zufuhr einer Flüssigkeit in den Speicher und Entladeeinrichtungen (34) dienen zum Entnehmen einer Flüssigkeit aus dem Speicher (10). Gemäß der Erfindung zeichnet sich der Speicher (10) dadurch aus, dass in dem Mantel (11) Öffnungen (22) vorgesehen sind, die mit herausnehmbaren Verschließelementen dicht verschließbar sind, und dass an jede Öffnung (22) eine Beladeeinrichtung (33) oder Entladeeinrichtung (34) auswechselbar anschließbar ist.

## Beschreibung

Die Erfindung betrifft einen Speicher zum temperaturgeschichteten Speichern von warmen Flüssigkeiten unterschiedlicher Temperatur, mit einem Mantel, mit einem Boden, einer Oberseite und einer den Boden und die Oberseite verbindenden Seitenwand wobei der Mantel ein Speicherinneres umgibt, das für die Aufnahme der Flüssigkeiten vorgesehen ist, mit Beladeeinrichtungen zur Zufuhr einer Flüssigkeit in den Speicher, und mit Entladeeinrichtungen zum Entnehmen einer Flüssigkeit aus dem Speicher.

Für die Versorgung von Gebäuden mit Heizwärme oder erwärmtem Trinkwasser werden zunehmend Systeme eingesetzt, bei denen warmes Wasser oder eine andere warme Flüssigkeit in einem Speicher eingelagert wird und bei Bedarf abgerufen werden kann. Derartige Speicher werden auch als Pufferspeicher bezeichnet.

Aus der EP 0 384 423 B1 und der DE 102 12 688 A1 ist es bekannt, derartige Pufferspeicher als Schichtenspeicher auszubilden. In derartigen Schichtenspeichern wird warme und insbesondere heiße Flüssigkeit bereitgehalten, damit sie bei Bedarf entnommen werden kann. Die Flüssigkeit wird temperaturabhängig in unterschiedlichen Schichten übereinander gespeichert, wobei von den temperaturbedingten Dichteunterschieden der Flüssigkeit Gebrauch gemacht wird. Diese Schichten sollen möglichst ungestört bleiben.

Die Entnahme erfolgt, um beispielsweise in einem Wärmetauscher eine Erwärmung von gerade benötigtem Brauchwasser vorzunehmen, wenn dieses etwa in Küche oder Bad angefordert wird, oder um beispielsweise direkt einem Heizkreis für die Raumheizung zugeführt zu werden. Die entsprechend dadurch abgekühlte Flüssigkeit wird dann in den Schichtenspeicher zurückgeleitet. Andererseits kann auch extern erwärmte Flüssigkeit zugeführt werden, beispielsweise aus einem Solarkreislauf oder auch aus anderen Wärmequellen.

Die Beladung und Entladung eines Pufferspeichers mit Flüssigkeiten unterschiedlicher Temperatur stellt bei den sich dynamisch überlagernden Wärmeströmen eine besondere Herausforderung dar. Je nach den speziellen Anforderungen und den als Verbraucher vorgesehenen Elementen und den zur Zufuhr extern erwärmter Flüssigkeit vorgesehenen Anlagen gibt es immer neue Optimierungsprioritäten.

Die aus der EP 0 384 423 B1 und der DE 102 12 688 A1 bekannten Konzepte für solche Schichtenspeicher tragen dem Umstand der dynamisch überlagerten Wärmeströme bereits möglichst Rechnung. Sie sind mit fest installierten Ladewechselvorrichtungen ausgerüstet, die bereits in der Lage sind, Wärmeströme mit einer relativ großen Temperaturbandbreite etwa aus einem Solarvorlauf eines Solarkreislaufs zielgerichtet in die entsprechende Temperaturschicht in dem Schichtenspeicher zu leiten. Auch zur Entnahme der Flüssigkeiten für einen Verbraucher sind fest installierte Elemente vorgesehen. Meist befinden sich die Vorrichtungen zur Entnahme und Beladung des Schichtenspeichers am oder in der Nähe des Bodens des Pufferspeichers.

Da bei der Herstellung eines entsprechenden Pufferspeichers meist noch nicht bekannt ist, welche konkreten Anforderungen durch Verbraucher und Wärmezuführungsanlagen bestehen, werden die Speicher ab Werk mit mehreren, als möglicherweise sinnvoll vorzusehenden Vorrichtungen bestückt, damit im Bedarfsfall die benötigten Vorrichtungen bereits im Speicher vorhanden sind und nicht etwa aufwändig nachgerüstet werden müssen, was meist auch gar nicht möglich ist.

Dadurch enthalten die Speicher natürlich auch häufig Vorrichtungen, die in dem tatsächlichen Anwendungsfall gar nicht benötigt werden.

Dies hat den Nachteil, dass Kosten für Vorrichtungen anfallen, die im Grunde nicht benötigt werden, und dass trotzdem die Anwendungsmöglichkeiten für einen konkreten Pufferspeicher auf bestimmte, als besonders häufig angenommene Situationen begrenzt sind, da keine beliebige Ausrüstung vorgesehen werden kann.

Im Regelfall optimiert ist ein derartiger Pufferspeicher im Hinblick auf die Bereitstellung von ausreichend temperiertem Bereitschaftsvolumen für eine Trinkwassererwärmung, da diese Anforderung im Vordergrund der meisten Endanwender steht. Auch eine Wärmeabnahme zur Gebäudebeheizung wird üblicherweise vorgesehen.

Recht problematisch ist es jedoch, dass durch derartige Speicherkonzepte keine Optimierung im Hinblick auf eine Effizienzsteigerung des jeweiligen individuellen Gesamtsystems erfolgen kann.

Aufgabe der Erfindung ist es daher, einen gattungsgemäßen Pufferspeicher vorzuschlagen, der bei unterschiedlichen Anforderungen flexibler ist.

Diese Aufgabe wird durch die Erfindung bei einem gattungsgemäßen Pufferspeicher dadurch gelöst, dass in dem Mantel Öffnungen vorgesehen sind, die mit herausnehmbaren Verschließelementen dicht verschließbar sind, und dass an jede Öffnung eine Beladeeinrichtung oder Entladeeinrichtung auswechselbar anschließbar ist.

Mit dieser Erfindung wird in anderen Worten ausgedrückt ein Pufferschichtenspeicher geschaffen, der am Speicherumfang mehrere Aufnahmen für die flexible Bestückung aufweist, sodass diese Aufnahmen mit geeigneten Beladeeinrichtungen und Entladeeinrichtungen bestückt werden können.

Diese Aufnahmen werden von Öffnungen gebildet. Diese Öffnungen können bei einer Nichtbelegung mittels Blindflanschen oder Blindstopfen dicht verschlossen werden. Es ist also möglich, eine Anzahl von Öffnungen vorzusehen, die größer ist als die Anzahl der aktuell oder bei der Erstinstallation gerade benötigten und eingesetzten Beladeeinrichtungen und Entladeeinrichtungen.

Mittels dieser Öffnungen kann anlagenspezifisch der Pufferspeicher mit Beladeeinrichtungen und Entladeeinrichtungen bestückt werden, wie sie gerade benötigt werden, ohne dass der Pufferspeicher damit auf Dauer für eine bestimmte Benutzungsform festgelegt wird. Andererseits kann auch eine größere Serie an Pufferspeichern gefertigt werden, die dann individuell und anlagenspezifisch an die Anforderungen eines bestimmten Kunden angepasst werden können. Es kann also weitgehend der gleiche Pufferspeicher gefertigt werden für einen Kunden, der nur Trinkwasser mit dem Pufferspeicher erzeugen möchte, und für einen anderen Kunden, der auch eine Heizungsanlage anschließen möchte. Es kann sowohl ein Kunde bedient werden, der zur Versorgung des Pufferspeichers eine Solarheizung auf seinem Dach bereits vorgesehen hat, als auch ein Kunde, bei dem dies nicht der Fall ist und der nur eine konventionelle Heizung nutzt oder möglicherweise Energie aus Erdwärme gewinnen möchte.

Durch eine jeweils individuelle und flexible Bestückung ein und desselben Pufferspeichers mit unterschiedlichen Beladeeinrichtungen und Entladeeinrichtungen kann eine effizienzsteigernde Optimierung des jeweiligen Gesamtsystems erfolgen.

Dabei können zum Einen mehrere Öffnungen im Mantel des Pufferspeichers nebeneinander vorgesehen werden, es können aber auch Öffnungen übereinander oder schräg versetzt vorgesehen werden und es sind auch Öffnungen sowohl nebeneinander als auch übereinander denkbar.

Die Öffnungen werden jeweils so vorgesehen, dass ein Anschluss entsprechender Beladeeinrichtungen und Entladeeinrichtungen austauschbar und nachträglich möglich ist, ohne dass andere Veränderungen im Pufferspeicher oder an dessen Aufstellort erforderlich werden.

Um den Austausch und das nachträgliche Anbringen von Beladeeinrichtungen und Entladeeinrichtungen zu vereinfachen, wird bevorzugt ein Flanschdeckel vorgesehen, der bei Bedarf einen Zugang zum Speicherinneren ermöglicht. Dadurch entsteht eine Flexibilität, das Speicherinnere auch nach der Erstmontage anzupassen. Der Flanschdeckel ist eine Art Tür, die allerdings nicht durch den Anwender geöffnet werden kann oder soll, sondern lediglich im Falle der beabsichtigten Umrüstung von entsprechendem Fachpersonal demontiert und wieder angebracht werden kann.

In der Praxis wird im Mantel des Behälters eine Ausnehmung vorgesehen, in deren Rand ein Flansch mittels einer Schweißnaht befestigt wird. Dieser Flansch dient dann als Grundlage für die Montage des erwähnten Flanschdeckels. Durch diese Konstruktion kann eine absolut dichte Befestigung des Flanschdeckels auf dem Flansch sichergestellt werden und somit ein dichter Verschluss der Ausnehmung bei Aufsetzen des Flanschdeckels.

Die Ausnehmung mit dem Flansch ist bevorzugt als Teil des Mantels ausgebildet. Der darauf befestigte Flanschdeckel ist also von der Seite (und nicht vom Boden) des Pufferschichtenspeichers aus zugänglich, was seine Demontage und anschließend den Zugang in das Speicherinnere am Aufstellungsort des Pufferschichtenspeichers deutlich vereinfacht.

Von besonderem Vorteil ist es dabei, wenn alle Öffnungen im Flanschdeckel vorgesehen sind.

Wenn die Öffnungen daher alle auf einem gemeinsamen Flanschdeckel angeordnet sind, entsteht auch noch eine weitere Möglichkeit. So sind verschieden belegte Flanschdeckel denkbar, die dann anlagenspezifisch auf einen immer gleichen Grundspeicher montiert werden.

Es wäre dann auch möglich, diese Flanschdeckel mit allen oder einzelnen Beladeeinrichtungen und Entladeeinrichtungen auszurüsten, so dass nur ein kompletter Flanschdeckel eingebaut oder auch bei einer späteren Änderung nachträglich installiert werden muss, was die Montagezeiten deutlich verringern würde.

Grundsätzlich käme auch eine Anordnung der Ausnehmung und des Flanschdeckels im Boden des Pufferschichtenspeichers in Betracht, wird aber aus diesen Gründen nicht bevorzugt.

Durch das Vorsehen eines Flanschdeckels im Mantel (oder im Boden) in bevorzugten Ausführungsformen können auch größere vertikal verlaufende Einrichtungen wie etwa die Ladewechselvorrichtungen aus der EP 0 384 423 B1 oder der DE 102 12 688 A1 nachträglich in einen fest installierten Pufferspeicher nachgerüstet werden und müssen nicht mehr ab Werk für jeden Pufferspeicher vorgesehen werden.

Dies hat auch den Vorteil, dass je nach Einsatzfall unterschiedliche Ladewechselvorrichtungen nachträglich eingebaut werden können, also unterschiedliche Typen und auch unterschiedliche Größen.

Es sind Ausführungsformen vorstellbar, deren Flanschdeckel eine sehr unterschiedliche Größe besitzt. Bei den meisten Ausführungsformen ist ein Flanschdeckel vorgesehen, da er es deutlich vereinfacht, einen oder mehrere Schichtenladeelemente in den Speicher einzuführen.

Eine alternative und konstruktiv etwas einfachere Möglichkeit besteht darin, nicht in einem Flanschdeckel, sondern im Mantel des Pufferspeichers selbst die Öffnungen vorzusehen. Diese Öffnungen könnten dann in Form von Muffen einer einheitlichen Anzahl und Anordnung fest vorgesehen werden. Auch in diesem Falle würden dann Beladeeinrichtungen und Entladeeinrichtungen in diesen Öffnungen eingebracht und angeschlossen, nicht benötigte Öffnungen und Muffen würden entsprechend durch Elemente wie etwa Blindstopfen dicht verschlossen.

Auch bei dieser Alternative kann eine Belegung in weiten Grenzen individuell geschehen. Für die Einbringung von rein horizontal verlaufenden Beladeeinrichtungen oder Entladeeinrichtungen könnte ein horizontales Einschieben durch die Öffnungen und Anschließen an den Öffnungen nach Öffnen des Blindstopfens erfolgen.

Für die Einbringung einer vertikalen Beladeeinrichtung oder Entladeeinrichtung wie beispielsweise für eine Schichtenladeeinrichtung wird es dagegen bevorzugt, wenn ein zumindest kleinerer Flanschdeckel im Mantel gleichwohl vorgesehen wird. Nach Öffnen des Flanschdeckels kann dann ein Zugriff erfolgen.

In einer weiteren Alternative werden mehrere Flanschdeckel vorgesehen, an denen Beladeeinrichtungen oder Entladeeinrichtungen montiert werden. Diese Flanschdeckel werden dann eingesetzt beziehungsweise gegen die ursprünglich vorgesehenen Blindflanschdeckel ausgetauscht und dabei die vertikalen Beladeeinrichtungen oder Entladeeinrichtungen in das Innere des Pufferspeichers eingefädelt. Die erfindungsgemäße Konzeption eines Pufferspeichers ist also in erster Linie in zwei unterschiedlichen Ausführungsformen denkbar, wobei auch eine Kombination der beiden grundsätzlichen Ausführungsformen und ihrer Merkmale miteinander möglich ist.

Zum Einen kann ein relativ großer Flanschdeckel vorgesehen werden, der selbst Einbauten aufweist. Er ist also mit Durchführungen vorgesehen, in die etwa eine Ladewechselvorrichtung eingebaut werden kann. Die große Öffnung ermöglicht einen einfachen Zugang in das Speicherinnere und das Anbringen der einzubauenden Einbauten.

Die zweite Ausführungsform setzt lediglich einen relativ kleinen Flanschdeckel ein. In diesem Falle werden Muffen zur Aufnahme der Belade- und Entladeeinrichtungen, also insbesondere etwa der erwähnten horizontalen Lanzen, fest mit dem Speicher verbunden. Der Flanschdeckel selbst ist nicht oder lediglich auch für eine oder wenige derartige Anschlüsse vorgesehen. Der Flanschdeckel, der den Zugriff in den Speicherinnere ermöglicht, ist hier lediglich für das Einführen insbesondere der vertikalen Lanzen vorgesehen. Diese treten dann außerhalb des Flansches durch die Wandung des Speichers.

Alle jeweils nicht benötigten Anschlüsse können beispielsweise mittels jeweils eine Blindstopfens verschlossen werden.

Durch den Flanschdeckel ergibt sich bei beiden Ausführungsformen auch die Möglichkeit, nachträglich Umrüstungen vorzunehmen, wenn sich der Anwendungszweck ändert oder etwa zusätzliche Verbraucher oder Wärmequellen an den Pufferspeicher angeschlossen werden sollen.

Die Möglichkeit der nachträglichen Ausrüstung entsteht aber nicht nur für derartige Ladewechselvorrichtungen, sondern auch für andere Be- und Entladeeinrichtungen.

Dadurch, dass diese nachträglich vorgesehen werden, kann eine größere Vielfalt an Kombinationen von Be- und Entladeeinrichtungen sinnvoll genutzt werden, die aufgrund der geringen Stückzahlen für selten auftretende Problemstellungen sonst wirtschaftlich und realistisch nicht hätten dargestellt werden können.

Mit dieser Lösung wird ein Pufferschichtenspeicher so flexibel wie nötig mit Einrichtungen zur Einlagerung und Entnahme von Wärmeströmen ausgestattet. Je nach Anforderung wird es möglich, ein Optimum an Effizienz für den gesamten Pufferspeicher zu erreichen. Gleichwohl ist das neue Speicherkonzept einfach zu handhaben.

Es wird möglich, warme Flüssigkeiten entsprechend ihrer Temperatur in der jeweiligen Schicht gleicher Temperatur ohne nennenswerte exergetische Verluste durch Vermischung einzulagern und dabei die Möglichkeiten von bereits gut funktionierenden Schichtenspeichern wie aus der DE 0 384 423 B1 zu erreichen und durch Optimierung sogar zu übertreffen.

Die entsprechenden Vorrichtungen sind einfach nachrüstbar und können auch für große Wärmemengen und große Volumenströme verwendet werden.

Durch die Kombination des Pufferspeichers mit den Be- und Entladeeinrichtungen wird dieser zu einem flexibel und universell anpassbaren Wärmemanager.

Es wird sogar möglich, niedrige Systemtemperaturen zur Effizienzsteigerung von Nachheizungen auszunutzen. Die eingehenden und ausgehenden Wärmeströme können hydraulisch entkoppelt werden.

Im Grunde unterscheiden sich die Be- und Entladeeinrichtungen, die jetzt gemäß bevorzugten Ausführungsformen der Erfindungen vorgesehen werden können, in drei Gruppen:

Es können horizontal verlaufende Funktionslanzen eingebracht werden, die projektspezifisch in Anzahl und Speicherhöhe in die vorgesehenen Öffnungen im Speichermantel oder im Flanschdeckel eingebaut werden und definierte Wärmeströme temperaturorientiert und ortsfest einlagern oder aber auch abrufen, etwa einerseits als Heizungsrücklauf und andererseits als Heizungsvorlauf.

Zum Anderen können auch vertikal verlaufende Funktionslanzen vorgesehen werden, wie beispielsweise die erwähnten Ladewechselvorrichtungen, mit denen ein Wärmestrom aus einem Solarvorlauf eingeführt werden kann. Auch die vertikal verlaufenden Funktionslanzen können projektspezifisch eingebaut werden und so in kurzem Zyklus temperaturvariable Wärmeströme temperaturorientiert und ortsunabhängig einlagern.

Als dritte Möglichkeit ergeben sich speicherinterne Steige- beziehungsweise Fallrohre, die das Volumen vom obersten bis zum untersten Speicherbereich erschließen können. Diese weisen an ihren Enden in Flussrichtungen bevorzugt Einrichtungen auf, die eine Verwirbelung auch bei größeren Volumenströmen verhindert.

Erfindungsgemäße Pufferspeicher können selbstverständlich Anwendung in Systemen finden, die zur Warmwasserbereitung (beispielsweise Trinkwasserbereitung) und Heizung genutzt werden. Sämtliche für die Beladung und für die Entladung benötigten Anschlüsse können über die Mantelfläche des Speichers eingebaut werden und sind jederzeit nachrüstbar. Durch den Flanschdeckel ist die Zugänglichkeit des Speicherinneren und damit die Nachrüstbarkeit gegeben.

Je nach Speichergröße können auch auf der selben Höhe mehrere Anschlüsse nebeneinander für den Zugang zu mehreren Lanzen vorgesehen werden, auch übereinander ist ein Zugang für mehrere Lanzen von der Seite eines Speichers möglich.

Die in einer großen Zahl möglich werdenden Anschlüsse schaffen eine Flexibilität bei der langfristigen Planung. Jeder Speicher lässt sich ohne größeren Aufwand und ohne erhebliche zusätzliche Kosten beliebig an Anforderungen anpassen und auch zu einem späteren Zeitpunkt nachrüsten. Insbesondere Letzteres ist für den Endanwender sehr vorteilhaft. Er kann beispielsweise mit einer Grundausstattung für seine Immobilie starten und im Laufe der Zeit den eingesetzten Pufferspeicher nachrüsten oder veränderten Bedürfnissen anpassen. So kann er beispielsweise mit einer reinen Anlage zur Trinkwassererwärmung und Heizungsunterstützung beginnen und im Laufe der Zeit jeweils eine Solaranlage, weitere Heizkreise, ein Schwimmbad, eine solarunterstützte Klimatisierung etc. ergänzen, ohne dass größere Komponenten oder etwa der komplette Pufferspeicher getauscht werden müssen.

Dadurch, dass die bisher am Speicherboden oder Speicherdom erforderlichen Anschlüsse entfallen und insbesondere durch Anschlüsse in der Seitenwand beziehungsweise im Flanschdeckel des Mantels des Pufferspeichers ersetzt werden, lässt sich das Puffervolumen pro Stellfläche erhöhen oder alternativ die Höhe des Speichers bei gleichbleibendem Flüssigkeitsvolumen verringern.

Die Zufuhr von warmer Flüssigkeit in den Beladeeinrichtungen von der Seite aus und nicht mehr durch den Boden des Speichers hat einen weiteren großen Vorteil. Da der warme Flüssigkeitsstrom nicht mehr durch den mit kalter Flüssigkeit gefüllten unteren Bereich des Speichers geführt werden muss und auch keine anderen, warmes Wasser zu- und abführenden Anschlüsse in diesem kalten Bereich vorhanden sind, kann auch keine Wärme an die kalte Wandung oder die kalte Flüssigkeit übertragen werden. Die Wärmeverluste durch die Erfindungsgemäße der Beladeeinrichtungen wird dadurch automatisch sehr gering. Der kalte Bereich wird somit auch nicht ungewollt erwärmt, wodurch mehr kalte Flüssigkeit zur Verfügung steht, wenn diese benötigt wird. Dies kann beispielsweise zu einer Steigerung des Wirkungsgrades einer Solaranlage oder eines Brennwertkessels führen.

Die Montage der Beladeeinrichtungen und Entladeeinrichtungen kann in dafür vorgesehene Aufnahmen an den Öffnungen sehr einfach installiert, erweitert und auch angepasst werden. Dabei macht sich besonders vorteilhaft, eine von der konkreten Einbauanordnung unabhängige Funktion bemerkbar.

Gleichwohl sind die Beladeeinrichtungen und Entladeeinrichtungen relativ einfach und auch normiert herstellbar, da immer die gleichen Anschlussmöglichkeiten vorzusehen sind. Das bedeutet, dass die Zahl der vorzuhaltenden Komponenten für solche Belade- und Entladeeinrichtungen auch reduziert wird, was diese wiederum kostengünstiger und auch von der Lagehaltung her praktikabler gestaltet.

Durch eine Auswahl und Kombination geeigneter Be- und Entladeeinrichtungen wie von lanzenartigen Elementen oder Schichtenladeelementen, meist in Rohrform ergibt sich eine geringe Durchmischung der Temperaturschichten im Pufferspeicher und somit eine gute Schichtung insbesondere auch bei sich dynamisch überlagernden Prozessen.

Da Durchdringungen im oberen sensiblen Bereich des Pufferspeichers vermieden werden, verringern sich auch die Wärmeverluste in diesem oberen Bereich.

Besonders bevorzugt ist es, wenn die Beladeeinrichtungen und/oder Entladeeinrichtungen Konvektionsbremsen zur Reduzierung einer Auskühlung durch Konvektion aufweisen.

Verschiedene Speicherzonen des erfindungsgemäßen Pufferspeichers können verschiedenen Temperaturniveaus zugeordnet werden. Durch die vielseitigen Anschlussmöglichkeiten am Pufferspeicher lässt sich das System und im speziellen die Wärmespeicherung optimal auf die jeweiligen Bedürfnisse des Anlagenbetreibers einstellen, sodass die Effizienz der Anlage deutlich gesteigert wird.

Mit einer einzigen Speicherbauart können darüber hinaus verschiedenste Anwendungen bedient werden. Dadurch verringert sich die beim Hersteller sonst vorzusehende Variantenvielfalt, was bei diesem zu einer Reduktion des Aufwandes bei der Planung und Produktion und damit zu einer Kostenreduktion führt.

Dadurch, dass sich sämtliche Vorrichtungen zur Beladung und Entnahme von warmen Flüssigkeiten relativ einfach nachrüsten lassen, muss der Speicher nur mit solchen Komponenten bestückt werden, die auch wirklich benötigt werden. Dies reduziert den Montageaufwand und die Kosten.

Im Folgenden werden anhand der Zeichnung einige Ausführungsbeispiele der Erfindung näher erläutert. Es zeigen:
- **Figur 1**: eine schematische Darstellung einer ersten Ausführungsform eines erfindungsgemäßen Pufferspeichers von vorn;
- **Figur 2**: eine schematische Darstellung des Pufferspeichers aus Figur 1 im Schnitt;
- **Figur 3**: eine schematische Darstellung einer zweiten Ausführungsform eines erfindungsgemäßen Pufferspeichers von vorn; und
- **Figur 4**: eine schematische Darstellung des Pufferspeichers aus Figur 3 im Schnitt.

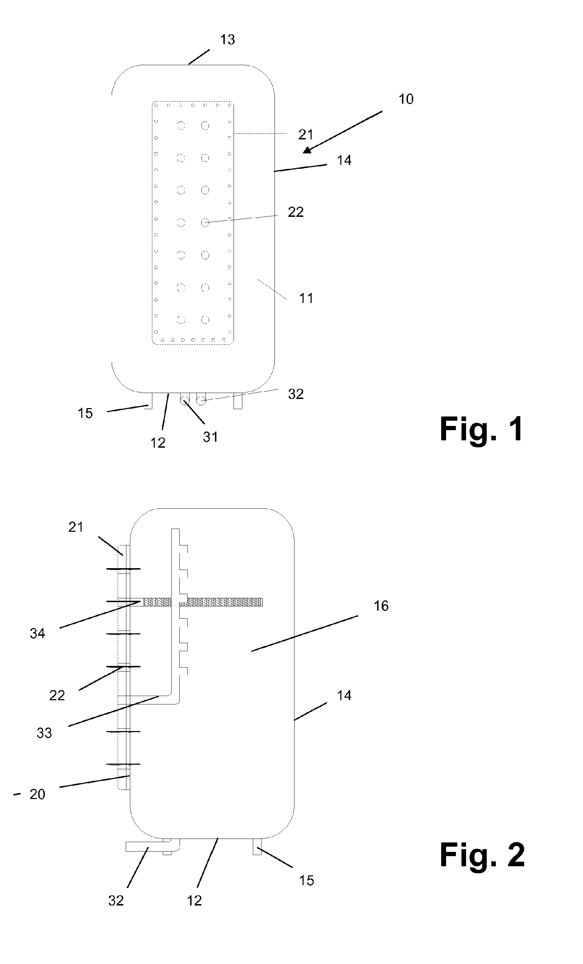

Ein in der **Figur 1** dargestellter Speicher 10 für die schichtenförmige Speicherung von warmen Flüssigkeiten besitzt einen Mantel 11. Im Inneren des Speichers 10 und seines Mantels 11 wird eine Flüssigkeit gespeichert. Es kann sich um Wasser handeln oder insbesondere auch um eine Mischung aus Wasser mit zusätzlichen Stoffen, etwa mit Gefrierschutzmitteln oder dergleichen.

Der Speicher 10 besitzt neben dem Mantel 11 noch einen Boden 12 und eine Oberseite 13. Der Mantel 11 ist beispielsweise zylindrisch um eine vertikale Achse oder aber auch etwa quaderförmig, wobei die kleinste Seitenfläche des Quaders von dem Boden 12 und der Oberseite 13 gebildet wird. Üblicherweise steht der Speicher 10 also aufrecht.

Er kann dabei auch auf Stellfüßen 15 angeordnet sein, um in seinem Boden 12 das Vorsehen von Anschlüssen zu ermöglichen oder auch, um eine thermische und mechanische Trennung des Bodens 12 von dem darunter liegenden Fußboden etwa eines Kellers zu erreichen. Der Speicher 10 kann entweder fertig ab Werk vormontiert werden oder aber auch in Teilen direkt in einem Keller aufgebaut werden.

Der Mantel 11 nebst Boden 12 und Oberseite 13 umgibt ein Speicherinneres 16 des Speichers 10. Im Inneren 16 (siehe Figur 2) des Speichers 10 innerhalb des Mantels 11 wird nun versucht, die Flüssigkeit so zu speichern, dass nach Möglichkeit keine oder nur geringe Strömungen und Vermischungen auftreten. Das führt dazu, dass temperaturbedingt die heißeren Flüssigkeitsschichten oben im Speicher 10 liegen, die kälteren dagegen unten. Dies liegt an der geringeren Dichte der heißeren Flüssigkeitsschichten.

Um diesen Zustand nun aufrecht zu erhalten, wird zusätzliches Kaltwasser im Bereich des Bodens 12 über eine Kaltwasserbeladeeinrichtung 31 zugeführt und etwa benötigtes Kaltwasser über eine Kaltwasserentladeeinrichtung 32 wieder entnommen. Der Begriff "Kaltwasser" steht hier auch für andere kalte Flüssigkeiten. Da die kältesten Bereiche innerhalb des Speichers 10 unten liegen, führt eine Anordnung der entsprechenden Entladeeinrichtung 32 und Beladeeinrichtung 31 zu der geringstmöglichen Durchmischung oder Beeinflussung der Flüssigkeit im gesamten Speicherinneren 16.

In herkömmlichen Speichern 10 findet im Bereich des Bodens 12 auch die Zufuhr und die Entladung mit warmer Flüssigkeit statt. Dies liegt unter Anderem daran, dass in dem Bereich des Bodens 12 ohnehin für das Kaltwasser Anschlüsse vorgesehen sind, und dass es auf diese Weise möglich ist, die Zufuhr mittels sogenannter Ladewechselvorrichtungen vertikal in verschiedene Schichten innerhalb der Flüssigkeit im Inneren des Speichers 10 einzuschichten, wie dies etwa in der EP 0 384 423 B1 beschrieben ist.

Erfindungsgemäß ist für die Zufuhr und die Entnahme von kalter und warmer Flüssigkeit eine andere Konzeption vorgesehen, die in einer Ausführungsform in der **Figur 2** gut zu erkennen ist. In dem Mantel 11 des Speichers 10 ist eine Ausnehmung vorgesehen.

In dieser Ausführungsform nimmt diese Ausnehmung 20 einen sehr großen Teil einer der Seitenwände des Mantels 11 des Speichers 10 ein.

Die Ausnehmung 20 wird von einem Rand begrenzt. In diesem Rand ist ein Flansch eingeschweißt. Dieser Flansch steht üblicherweise etwas über dem Mantel 11 des Behälters 10 nach außen über (nicht dargestellt). Dadurch bildet er zugleich eine Montagemöglichkeit für einen Flanschdeckel 21.

Die Ausnehmung 20 mit dem Flansch wird durch den Flanschdeckel 21 verschlossen. Dieser Flanschdeckel 21 ist also so groß, dass er die komplette Ausnehmung 20 verschließen kann, und zwar selbstverständlich flüssigkeitsdicht, um ein Ausfließen der Flüssigkeit aus dem Inneren 16 des Speichers 10 zu vermeiden. Hierzu wird der Flanschdeckel 21 auf dem Flansch befestigt. Dieser Flanschdeckel 21 wird auch nicht durch den Endverbraucher und Benutzer des Speichers 10 geöffnet, sondern lediglich im Falle von Wartung oder Reparatur oder Umrüstung des Speichers 10.

Der Flanschdeckel 21 weist eine Vielzahl von Öffnungen 22 auf. Jede dieser Öffnungen 22 ist grundsätzlich dazu in der Lage, mit einer Beladeeinrichtung 33 oder einer Entladeeinrichtung 34 versehen zu werden.

Diejenigen Öffnungen 22, die gerade keine an sie angeschlossene Be- oder Entladeeinrichtung aufweisen, sind mit einem Blindstopfen verschlossen, um später gegebenenfalls doch zur Verfügung zu stehen und im Nichtnutzungsfalle ebenfalls dicht verschlossen zu sein.

Man sieht in der Figur 2 eine angeschlossene Beladeeinrichtung 33 an der dritten Öffnung 22 von unten und eine Entladeeinrichtung 34 an der zweiten Öffnung von oben angeschlossen.

Es ist auch möglich, Beladeeinrichtungen 33 und Entladeeinrichtungen 34 an Öffnungen 22 anzuschließen, die einerseits zum Beladen und andererseits auch zum Entladen genutzt werden können. Es können also auch Beladeeinrichtungen 33 und Entladeeinrichtungen 34 gegeneinander getauscht werden, wenn dies für eine spezielle Änderung des Verwendungszweckes des jeweiligen Pufferspeichers 10 angezeigt erscheint. In der Darstellung in den Figuren ist hier nur eine schematische Wiedergabe vorgesehen.

Die Beladeeinrichtung 33 kann einer herkömmlichen Beladeeinrichtung etwa aus der DE 102 12 688 A1 entsprechen, aber auch anders aufgebaut sein. Anders als bisher meist üblich, erstreckt sie sich nicht vertikal vom Boden aus nach oben, sondern verläuft zunächst von der Öffnung 22 horizontal in das Innere des Speichers 10 und erst dort nach einer Umlenkung vertikal nach oben, wobei aus der vertikalen wiederum ein Ausströmen der Flüssigkeit ermöglicht wird und zwar exakt in der Schicht, die der Temperatur der Flüssigkeit in der Beladeeinrichtung 33 entspricht. Die hierzu geeigneten Ventile sind beispielsweise in der EP 0 384 423 B1 beschrieben.

Wird eine Entladeeinrichtung 34 eingesetzt, so entnimmt sie Flüssigkeit aus der Schicht ihrer Einbauposition. Im Gegensatz zu einem freien Auslauf wird dabei Flüssigkeit nicht nur aus dem Randbereich der jeweiligen Schicht entnommen, sondern aus nahezu dem gesamten Schichtquerschnitt. Dies beugt unerwünschten speicherinternen Fehlströmungen vor.

Wird dagegen eine Beladeeinrichtung 33 eingesetzt, bringt sie entsprechende Flüssigkeit vorzugsweise impulsarm in den Speicher ein.

Dadurch, dass die Beladeeinrichtungen 33 und Entladeeinrichtungen 34 austauschbar und auch nachträglich auswechselbar sind, besteht sogar die Möglichkeit, erst zu einem späteren Zeitpunkt entwickelte individuell verbesserte Beladeeinrichtungen 33 oder Entladeeinrichtungen 34 nachträglich einzusetzen, die zum Zeitpunkt der Erstinbetriebnahme eines Pufferspeichers 10 noch gar nicht entwickelt waren oder deren spezielle Eigenschaften sich erst während des Betriebes des Pufferspeichers 10 als sinnvoll erwiesen haben.

Wird nun nachträglich eine geänderte Konstellation von Beladeeinrichtungen 33 und Entladeeinrichtungen 34 gewünscht, so kann einfach der Flanschdeckel 21 demontiert werden (nachdem die Flüssigkeit für diesen Zweck aus dem Speicherinneren 16 entfernt worden ist). An den Öffnungen 22 können dann entsprechend andere Beladeeinrichtungen 33 und Entladeeinrichtungen 34 angeschlossen werden und/oder die Belade- und Entladeeinrichtungen werden an bisher noch nicht eingesetzten Öffnungen 22 angeschlossen.

So kann beispielsweise der gleiche Pufferspeicher zusätzlich mit einer Beladeeinrichtung für eine weitere Energiequelle versehen werden, beispielsweise für eine nachträglich installierte Solaranlage auf dem Dach oder einen anderen Rücklauf aus einer Heizungsanlage mit warmem, aber nicht mehr heißem Wasser. Ebenso können auch andere Verbraucher angeschlossen werden, etwa zusätzlich zu einer Heizungswasserentnehme eine Trinkwasserentnahme.

Die Entladeeinrichtungen 34 können nebeneinander auf gleicher Höhe für die Entnahme von Flüssigkeit identischer Temperatur vorgesehen werden, oder auch in unterschiedlicher Höhe zur Entnahme von Flüssigkeit verschiedener Temperatur.

Es ist auch möglich (nicht dargestellt), den Pufferspeicher mit einer Brenneranlage zu kombinieren, also auch in dem Speicher 10 direkt eine Wärmequelle im vorzugsweise oberen Bereich anzuordnen, um heißes Wasser in den oberen Schichten im Speicherinneren 16 zusätzlich zu erzeugen.

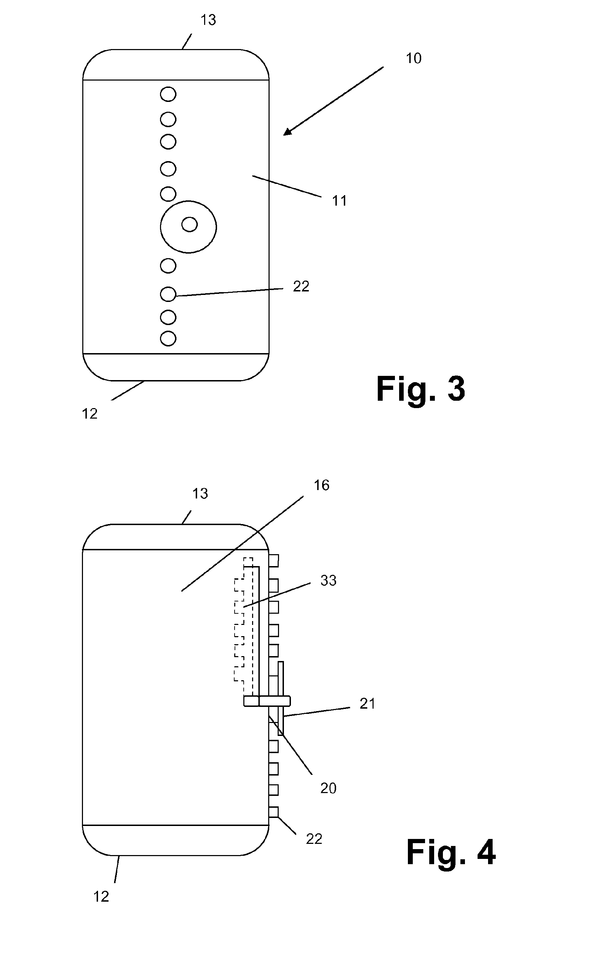

In der **Figur 3** ist eine andere Ausführungsform der Erfindung dargestellt. Man sieht hier ebenfalls einen Speicher 10 mit einem Mantel 11, einem Boden 12 und einer Oberseite 13, die das Innere 16 des Speichers 10 rundum umgeben.

Die Ausnehmung 20 ist hier allerdings sehr viel kleiner als in der ersten Ausführungsform gestaltet. Dementsprechend ist auch der Flanschdeckel 21 zum Verschließen der Ausnehmung 20 sehr viel kleiner; auch er dichtet selbstverständlich die Ausnehmung dicht ab.

Auch hier sind Öffnungen 22 vorgesehen, allerdings weitgehend nicht auf der Fläche des Flanschdeckels 21, sondern in der Seitenwand 14 des Mantels 11 des Speichers 10. In der Ausführungsform in der Figur 3 ist eine Öffnung 22 allerdings im Flanschdeckel 21 angeordnet.

In der Seitenansicht der **Figur 4** sieht man, dass die Öffnungen 22 im Übrigen aber zu den gleichen Zwecken, wie in der Ausführungsform aus den Figuren 1 und dienen. Auch hier können Beladeeinrichtungen 33 und Entladeeinrichtungen 34 angeschlossen werden.

Auch hier ist eine nachträgliche Montage und Demontage der Beladeeinrichtungen 33 und Entladeeinrichtungen 34 im Speicherinneren 16 möglich. Zu diesem Zweck wird auch hier der Flanschdeckel 21 geöffnet und damit die Ausnehmung 20 zugänglich gemacht.

Allerdings werden hier die Beladeeinrichtung 33 und Entladeeinrichtung 34 nicht an den Öffnungen 22 im Flanschdeckel 21 angeschlossen (abgesehen von der in dem Flansch 21 vorgesehenen Öffnung 22), sondern an den Öffnungen 22, die durch die Seitenwand 14 des Mantels 11 ragen. Der Austausch oder die Nachrüstung von Beladeeinrichtung 33 und Entladeeinrichtung 34 ist dadurch etwas aufwendiger, da die Montage durch die frei gelegte Ausnehmung 20 in der Seitenwand 14 hindurch erfolgen muss, sie bleibt jedoch möglich. Auch relativ lang gestreckte und kompliziert aufgebaute Beladeeinrichtungen 33 oder Entladeeinrichtungen 34 können zunächst durch die Ausnehmung 20 in das Innere 16 des Speichers 10 eingeführt und dort vertikal ausgerüstet werden, ehe sie dann von Innen an die Öffnungen 22 heran geführt und von Innen und Außen entsprechend angeschossen und befestigt werden.

### Bezugszeichenliste

- 10: Speicher
- 11: Mantel des Speichers 10
- 12: Boden des Speichers 10
- 13: Oberseite des Speichers 10
- 14: Seitenwandung des Speichers 10
- 15: Stellfüße des Speichers 10
- 16: Speicherinneres

- 20: Ausnehmung
- 21: Flanschdeckel
- 22: Öffnungen für Anschlüsse

- 31: Beladeeinrichtung für Kaltwasser
- 32: Entladeeinrichtung für Kaltwasser
- 33: Beladeeinrichtung für Wasser
- 34: Entladeeinrichtung für Wasser

## Patentansprüche

1. Speicher (10) zum temperaturgeschichteten Speichern von warmen Flüssigkeiten unterschiedlicher Temperatur,
mit einem Mantel (11), einem Boden (12) und einer Oberseite (13) wobei der Mantel (11) ein Speicherinneres (16) umgibt, das für die Aufnahme der Flüssigkeiten vorgesehen ist,
mit Beladeeinrichtungen (33) zur Zufuhr einer Flüssigkeit in den Speicher, und
mit Entladeeinrichtungen (34) zum Entnehmen einer Flüssigkeit aus dem Speicher (10),
**dadurch gekennzeichnet,**
**dass** in dem Mantel (11) Öffnungen (22) vorgesehen sind, die mit herausnehmbaren Verschließelementen dicht verschließbar sind, und **dass** an jede Öffnung (22) eine Beladeeinrichtung (33) oder Entladeeinrichtung (34) auswechselbar anschließbar ist.

2. Speicher (10) nach Anspruch 1,
**dadurch gekennzeichnet,**
**dass** die Anzahl der Öffnungen (22) gleich oder größer ist als die Anzahl der installierten Beladeeinrichtungen (33) und Entladeeinrichtungen (34).

3. Speicher (10) nach Anspruch 1 oder 2,
**dadurch gekennzeichnet,**
**dass** die Öffnungen (22) in unterschiedlicher Höhe des Mantels (11) vorgesehen sind.

4. Speicher (10) nach einem der vorstehenden Ansprüche,
**dadurch gekennzeichnet,**
**dass** mehrere Öffnungen (22) nebeneinander in einer Höhe vorgesehen sind.

5. Speicher (10) nach einem der vorstehenden Ansprüche,
**dadurch gekennzeichnet,**
**dass** der Mantel (11) eine Ausnehmung (20) aufweist, die von einem insbesondere angeschweißten Flansch umgeben ist,
**dass** die Ausnehmung (20) mit einem montierbaren und demontierbaren Flanschdeckel (21) auf dem Flansch dicht verschließbar ist, und **dass** die Größe der Ausnehmung (20) so bemessen ist, dass durch sie hindurch im Speicherinneren (16) eine Montage und Demontage von Beladeeinrichtungen (33) und Entladeeinrichtungen (34) möglich ist.

6. Speicher (10) nach Anspruch 5,
**dadurch gekennzeichnet,**
**dass** alle Öffnungen (22) im Flanschdeckel (21) vorgesehen sind.

7. Speicher (10) nach einem der vorstehenden Ansprüche,
**dadurch gekennzeichnet,**
**dass** zumindest einige der Beladeeinrichtungen (33) Schichtenladeelemente aufweisen, die von den Öffnungen zunächst horizontal in das Speicherinnere (16) verlaufen und dann in eine vertikal nach oben führende Richtung umgeschwenkt sind.

8. Speicher (10) nach einem der vorstehenden Ansprüche,
**dadurch gekennzeichnet,**
**dass** die Beladeeinrichtungen (33) und/oder Entladeeinrichtungen (34) Konvektionsbremsen zur Reduzierung einer Auskühlung durch Konvektion aufweisen.
